# EUROPÄISCHE PATENTSCHRIFT

(11) **EP 1 196 885 B1**
(45) Veröffentlichungstag und Bekanntmachung des Hinweises auf die Patenterteilung: **10.09.2003**
(21) Anmeldenummer: 00926806.1
(22) Anmeldetag: 04.04.2000
(51) Int. Cl.: G06K 7/10

(54) **LESEANORDNUNG FÜR INFORMATIONSSTREIFEN MIT OPTISCH KODIERTER INFORMATION**
SYSTEM FOR READING AN INFORMATION STRIP CONTAINING OPTICALLY CODED INFORMATION
DISPOSITIF DE LECTURE POUR BANDE D'INFORMATION COMPORTANT UNE INFORMATION CODEE OPTIQUEMENT

(30) Priorität: 08.04.1999 DE 19924750
(43) Veröffentlichungstag der Anmeldung: 17.04.2002
(73) Patentinhaber: OVD Kinegram AG, 6301 Zug (CH)
(72) Erfinder: TOMPKIN, Wayne, Robert, CH-5400 Baden (CH); STAUB, René, CH-7260 Cham (CH)
(74) Vertreter: LOUIS- PÖHLAU- LOHRENTZ
(86) Internationale Anmeldenummer: EP0002987
(87) Internationale Veröffentlichungsnummer: WO00062237

(56) Entgegenhaltungen:
- EP-A- 0 360 969
- EP-A- 0 537 431
- EP-A- 0 718 795
- JP-A- 8 163 380
- US-A- 4 544 266
- US-A- 5 627 663

## Beschreibung

Die Erfindung bezieht sich auf eine Anordnung zum maschinellen Lesen von Informationsstreifen mit optisch kodierter Information gemäss dem Oberbegriff des Anspruchs 1.
Solche Leseanordnungen werden zur maschinellen Überprüfung von Dokumenten, wie Ausweisen, Kredit- und Zahlkarten, Pässen, Banknoten, Wertpapieren, wertvollen Gegenständen bzw. Produkten und deren Verpackung usw., eingesetzt, die einen Informationsstreifen mit optisch kodierter Information aufweisen.

Aus der EP 0 718 795 A1 ist eine Leseanordnung für Informationsstreifen mit optisch kodierter Information bekannt. Optische Markierungen sind auf dem Informationsstreifen in Bit - Zeilen angeordnet, wobei wenigstens zwei Bit - Zeilen mit identischer Einteilung in gleich grosse Flächenteile benötigt werden. Jedes Flächenteil ist beispielsweise mit einem optischen Beugungselement belegt. Die Beugungselemente derselben Bit - Zeile weisen die gleichen Gitterparameter (Spatialfrequenz, Profilform, Azimut usw.) auf und unterscheiden sich von den Beugungselementen der benachbarten Bit - Zeile. Jeweils ein Flächenteil aus der einen Bit - Zeile bildet mit dem benachbarten Flächenteil aus anderen Bit - Zeile ein Bit - Paar, das ein einzelnes Bit der Information darstellt. Bei diesen Informationsstreifen lässt sich nach der Herstellung eine Information individuell einmal einschreiben, wobei beim Einschreiben der Information in einem der beiden Flächenteile des Bit - Paares das optische Verhalten des Flächenteils irreversibel verändert wird. Mehrere Ausführungen der Informationsstreifen sind beschrieben. Spezielle Strukturen der Beugungselemente sind z.B. aus WO 97/19821 und WO 98/10324 bekannt.

Es ist auch bekannt (EP 0 883 085 A1), dass jedes Flächenteil eines einzeiligen Informationsstreifen aus einer Vielzahl von Teilflächen aufzubauen, die abwechslungsweise mit einem von zwei verschiedenen optischen Beugungselementen aus der Menge a, b, c, d usw. belegt sind. Die Beugungselemente einer der Mengen a, b, c, d usw. weisen die gleichen Gitterparameter (Spatialfrequenz, Profilform, Azimut usw.) auf und unterscheiden sich von den Beugungselementen der übrigen Mengen. Jedes Flächenteil unterscheidet sich von seinen beiden Nachbam durch die Auswahl der Beugungselemente für die Teilflächen. Die Information dieser Informationsstreifen ist bei allen gleich und lässt sich nicht individuell für jeden Informationsstreifen verändern.

Ein aus Beugungselementen aufgebauter Bar- oder Strichkode und ein für Etiketts mit einem solchen Strichkode geeigneter Leser sind in der EP 0 366 858 A1 beschrieben. Der Informationsgehalt dieses Strichkodes ist nicht individuell veränderbar.

Die in den genannten Dokumenten beschriebene Leseanordnungen tasten die Information mittels eines schmalen, senkrecht auf die Ebene des Informationsträgers einfallenden Lichtbündels ab und beobachten das an den Beugungselementen des Informationsträgers gebeugte Licht mittels Photoelementen. Diese Leseanordnungen weisen den Nachteil auf, dass zum Abtasten der Information auf dem Informationsstreifen das Lichtbündels relativ zum Informationsträgers bewegt werden muss.

Ohne eine zusätzliche und teuere Taktspur auf dem Informationsträgers gemäss der EP 0 718 795 A1 muss die Geschwindigkeit dieser Relativbewegung gleichmässig sein, damit die abgelesene Information erkannt werden kann.

Der in der WO 98/55963 beschriebene Leser verwendet anstelle der üblichen diskreten Photoelemente auch Photodetektoren - Arrays, die auch unter dem Namen "Charge Coupled Device" oder CCD bekannt sind. Ein optisches Element wandelt das aus einer Punktquelle emittierte Licht in ein senkrecht auf die ganze Fläche mit den beugungsoptischen Markierungen einfallendes, paralleles Lichtbündel um, das wenigstens die ganze Fläche mit den beugungsoptischen Markierungen beleuchtet. Das an diesen Markierungen gebeugte Licht wird wieder durch das optische Element gesammelt und punktförmig auf die Photodetektoren - Arrays fokussiert. Der Leser kommt ohne eine Relativbewegung zwischen dem einfallenden Licht und dem Informationsstreifen aus, ist weitgehend unabhängig von der Distanz zwischen den Markierungen und dem optischen Element. Eine Ausführung kann auch Azimutfehler tolerieren. Als Nachteil muss eine Beschränkung des Umfangs der Information in Kauf genommen werden.

Aus EP-A 0 537 431, die zur Abgrenzung der Ansprüche gegenüber dem stand der Technik dient, ist eine Einrichtung zum optischen Erkennen von Dokumenten bekannt. Zwei beidseitig einer zeilenförmigen Anordnung von Photodetektoren angebrachten Leuchtmittel beleuchten das Dokument in einem schmalen Bereich, der sich quer über das Dokument erstreckt. Eine Stelle im beleuchteten Bereich streut das Licht in mehrere Photodetektoren. Die Reihe der Photodetektoren ist kürzer als die Leuchtzeile. Da eine Abbildung des Dokumentes auf den lichtempfindlichen Flächen der Photodetektoren erzeugt wird, kann aus den von den Photodetektoren abgegebenen Signalen keine Wiedergabe des aufgedruckten Musters erzeugt werden.

Auch aus der EP-A 0 385 478 ist ein Strichkodeleser bekannt, der den "CCD" Detektorarray benutzt und sich für das Ablesen eines Felds mit mehreren Strichkodezeilen eignet. Die Auflösung des "CCD"- Detektorarrays ist so gut, dass das mit ihm verbundene Auswertegerät das wegen mangelnder Ausrichtung des Strichkodelesers verzeichnete Abbild des Strichkodefelds elektronisch entzerren kann.

Der Erfindung liegt die Aufgabe zugrunde, eine einfache und kostengünstige Anordnung zum maschinellen Lesen von Informationsstreifen mit optisch kodierter Information zu schaffen, die mit hoher Sicherheit die Information erfasst.

Die genannte Aufgabe wird erfindungsgemäss durch die im Kennzeichen des Anspruchs 1 angegebenen Merkmale gelöst.

Vorteilhafte Ausgestaltungen der Erfindung ergeben sich aus den abhängigen Ansprüchen. Ausführungsbeispiele der Erfindung sind in den Zeichnungen der Figuren 1a, 1b, 3 und 4 dargestellt und werden im folgenden näher beschrieben.

Es zeigen:

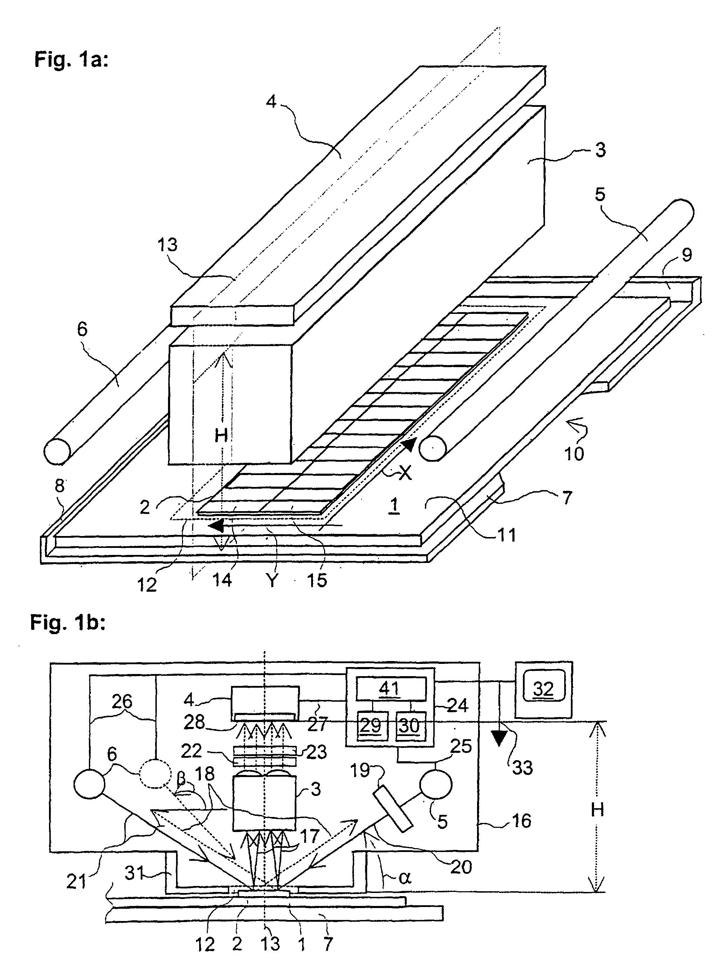

- Figur 1a: eine Anordnung zum Lesen,
- Figur 1 b: die Anordnung zum Lesen im Schnitt,
- Figur 2a: einen Informationsstreifen,
- Figur 2b: den Informationsstreifen im Schnitt,
- Figur 3: eine Detektorenanordnung,
- Figur 4: eine erste und zweite Sequenz von Detektorsignalen und
- Figur 5: ein Dokument.

In der Figur 1a bedeuten 1 ein Dokument, 2 einen Informationsstreifen, 3 ein optisches Abbildungselement, 4 eine Detektorenanordnung, 5 eine erste Beleuchtungseinrichtung, 6 eine zweite Beleuchtungseinrichtung, 7 eine Leseebene, 8, 9 Berandungen der Leseebene 7 und 10 eine Ausnehmung zum erleichterten Entfernen des gelesenen Dokuments 1. Das Dokument 1 liegt auf der Leseebene 7 und weist auf seiner Vorderseite 11 den Informationsstreifen 2 auf. Die Berandungen 8 und 9 der Leseebene 7 positionieren das Dokument 1 derart, dass der Informationsstreifen 2 auf seiner ganzen Länge vollständig innerhalb eines streifenförmigen Lesebereichs 12 zu liegen kommt. Der Lesebereich 12 ist aus darstellerischen Gründen gestrichelt umrandet Der Lesebereich 12 wird durch das Abbildungselement 3 und/oder die Detektorenanordnung 4 festgelegt als den Bereich der Leseebene 7, der mittels des Abbildungselements 3 auf lichtempfindliche Flächen der Detektorenanordnung 4 abgebildet wird. Der mittels des Abbildungselements 3 auf die Detektorenanordnung 4 abgebildete Lesebereich 12 ist wenigstens in seiner Längsrichtung kleiner als die lichtempfindlichen Flächen. Eine gedachte Symmetrieebene 13 ist parallel zu einer optischen Achse des Abbildungselements 3 und schneidet das Abbildungselement 3, die Detektorenanordnung 4 und den Lesebereich 12 mittig in der Längsrichtung. Die Symmetrieebene 13 ist in einer Ausführung der Leseanordnung senkrecht zur Leseebene 7, in einer anderen Ausführung geneigt. Das Dokument 1 wird mit dem Informationsstreifen 2 gegen das Abbildungselement 3 gerichtet auf die Leseebene 7 gelegt und mit Hilfe der Berandungen 8, 9 so ausgerichtet, dass der Informationsstreifen 2 im Lesebereich 12 ist. Der Abstand H zwischen den lichtempfindlichen Flächen der Detektorenanordnung 4 und dem Lesebereich 12 ist der Abstand zwischen der Bild - und Objektebene des Abbildungselements 3.

Die Leseanordnung umfasst wenigstens das optische Abbildungselement 3, die Detektorenanordnung 4, wenigstens eine Beleuchtungseinrichtung 5, 6 und die Leseebene 7. Zur Erleichterung der Beschreibung wird parallel zur Leseebene 7 ein auf den Lesebereich 12 ausgerichtetes, rechtwinkliges Koordinatensystem verwendet, dessen Ordinate Y parallel zur kürzeren Seite und deren Abszisse X parallel zur Längsseite des Lesebereichs 12 ausgerichtet sind.

Für das Abbildungselement 3 eignet sich eine einzelne Linse, die wegen der erforderlichen Grösse sehr teuer ist, ein Feld mit einer Vielzahl von kleinen Linsen mit einem Durchmesser aus dem Bereich 0,01 mm bis 2 mm oder von kleinen Zylinderlinsen mit ihrer Achse parallel zur Ordinate Y oder von Fresnellinsen mit den Eigenschaften der runden Linsen bzw. der Zylinderlinsen, wobei das Feld wenigsten die Abmessungen des Lesebereichs 12 aufweist. Als Abbildungselement 3 ist auch ein Bündel von Lichtleitern verwendbar, insbesondere sind solche Bündel mit Abbildungseigenschaften wie z.B. die SELFOC® "Lens Arrays" der Firma Nippon Sheet Glass Co., Ltd., Tokyo, JP sehr geeignet.

Der Informationsstreifen 2 kann direkt in das Dokument 1 integriert sein, z.B. bei kartenförmigen Dokumenten 1, Münzen, Jetons usw. oder auch in Form eines Etiketts auf die eingangs erwähnten Arten des Dokuments 1 aufgeklebt sein. Der Informationsstreifen 2 ist rechteckförmig und weist auf wenigstens zwei Zeilen eine Einteilung in gleich grosse Rasterelemente 14, 15 auf. Die Längsberandung des Informationsstreifens 2 ist parallel zur Abszissenachse X gelegt. Die Rasterelemente 14 der ersten Zeile weisen alle denselben Bereich der Ordinate Y₁ und die Rasterelemente 15 der zweiten Zeile weisen alle denselben Bereich der Ordinate Y₂ auf. Die N Rasterelemente 14 bzw. 15 in jeder Zeile unterscheiden sich in der Abszisse Xₖ, wobei der Index k die Werte von 1 bis N durchläuft. Im Neuzustand, d.h. im unbeschriebenen Zustand, des Informationsstreifens 2 weisen die N Rasterelemente 14 ein identisches optisches Verhalten auf. Auch das optische Verhalten der N Rasterelemente 15 ist identisch und unterscheidet sich vom optischen Verhalten der Rasterelemente 14.

In der Figur 1b ist die Leseanordriung im Schnitt dargestellt, wobei die Leseebene 7 und die Symmetrieebene 13 senkrecht zur Schnittebene sind. Die Leseanordnung ist in einem Gehäuse 16 untergebracht, das externes Licht fernhält und verhindert, dass Licht von der Beleuchtungseinrichtung 5, 6 direkt zur Detektorenanordnung 4 vordringt. Längs des optischen Abbildungselements 3 erstrecken sich über dem Dokument 1 parallel zur Symmetrieebene 13 und zur Leseebene 7 zwei Beleuchtungseinrichtungen 5, 6. Das Abbildungselement 3 ist derart von der Oberfläche 11 (Figur 1a) beabstandet, dass jede Beleuchtungseinrichtung 5 bzw. 6 allein in der Lage ist, den Lesebereich 12 vollständig und möglichst gleichmässig auszuleuchten. Die Lichtwege können, wie in der Zeichnung dargestellt, geradlinig verlaufen und/oder mittels Prismen, Spiegel, Lichtleiter usw. abgelenkt werden, beispielsweise um eine den Einbaubedingungen angepasste Leseanordnung zu erhalten.

Das optische Abbildungselement 3 sammelt das am Informationsstreifen 2 in seinem Akzeptanzwinkel eintreffende, ideal im wesentlichen fast parallel zur Symmetrieebene 13 durch Streuung oder Beugung abgelenkte Licht 17 derart, dass wenigstens in seiner Längsausdehnung der Informationsstreifen 2 auf den lichtempfindlichen Flächen der Detektorenanordnung 4 abgebildet wird. An der Oberfläche 11 oder an anderen Flächen gespiegeltes Licht 18 wird vom Abbildungselement 3 nicht eingefangen.

Die Beleuchtungseinrichtungen 5, 6 weisen im einfachsten Fall eine lineare Ausdehnung einer Lichtquelle parallel zur Längsseite des Lesebereichs 12 auf. Beispiele sind Soffitten - Glühlampen mit einem gestreckten Glühdraht, Fluoreszenzröhren oder eine lineare Anordnung von Leuchtdioden usw. Zwischen der Beleuchtungseinrichtung 5 bzw. 6 und dem Lesebereich 12 ist mit Vorteil eine Optik 19 angeordnet, die einen Beleuchtungsstrahl 20 bzw. 21 erzeugt. Die Optik 19 homogenisiert die Intensität der Beleuchtung im Lesebereich 12 und/oder kollimiert den Beleuchtungsstrahl 20 bzw. 21. Auch das Licht einer punktförmigen Lichtquelle, z.B. erzeugt mit einer Laserdiode, wird durch die Optik 19 auf die Abmessungen des Lesebereichs 12 aufgeweitet. Dies bewirkt eine gleichmässige Beleuchtung im ganzen Lesebereich 12. Die Beleuchtungsrichtungen α, β sind die Projektionen der auf den Lesebereich 12 einfallenden Beleuchtungsstrahlen 20, 21 auf eine Ebene, die sowohl zur Symmetrieebene 13 als auch zur Leseebene 7 senkrecht ist, und fallen unter Beleuchtungsrichtungen α, β auf den Lesebereich 12 ein. Die Beleuchtungsrichtung α bzw. β bildet mit der Leseebene 7 einen Winkel, der im Bereich von 10° bis 60° für die Beleuchtungsrichtung α bzw. im Bereich von 120° bis 170° für Beleuchtungsrichtung β liegt. Die Optik 19 besteht aus einer Streuscheibe, einer Zylinderlinse, einem holographisch erzeugten optischen Element (HOE) usw., einzeln oder in Kombination mit einem Farbfilter und/oder mit einem Polarisationsfilter usw. Mit den Filtern kann die Qualität des Lichts im Beleuchtungsstrahl 20 bzw. 21 festgelegt werden. Für jede nacheinander auszulesende Zeile des Informationsstreifens 2 ist die Beleuchtung im Lesebereich 12 in Bezug auf die Qualität des Lichts und/oder auf die Beleuchtungsrichtung α, β festgelegt. Die Leseanordnung erzeugt nacheinander entsprechend der Anzahl Zeilen im Informationsstreifen 2 zwei oder mehr Beleuchtungsstrahlen 20, 21. Die Beleuchtungseinrichtungen 6 können auf der gleichen Seite des Abbildungselementes 3 angeordnet sein, um den Lesebereich 12 aus den verschiedenen Beleuchtungsrichtungen α, β und/oder mit den verschiedenen Qualitäten des Lichts auszuleuchten. Als Spezialfall ist eine Ausführung mit einer Beleuchtungseinrichtung 5 zu verstehen, bei der die Qualität des Lichts im Beleuchtungsstrahl 20 veränderbar ist oder wenigstens zwei Lichtqualitäten, beispielsweise polychromatisches Licht, gleichzeitig aussendet. Bei einer anderen Ausführung sind die Beleuchtungseinrichtungen 5, 6 beiderseits der Symmetrieebene 13, symmetrisch oder asymmetrisch, angeordnet.

Weist die gesamte lichtempfindliche Fläche der Detektorenanordnung 4 die Form eines Rechtecks auf, wird zwischen dem Abbildungselement 3 und der Detektorenanordnung 4 mit Vorteil ein zusätzliches optisches Element, ein eindimensionaler Streuer 23 angeordnet, um die Lagetoleranz des Informationsstreifens 2 im Lesebereich 12 zu erhöhen und die Empfindlichkeit auf lokale Defekte in den Rasterelementen 14, 15 zu erniedrigen. Der eindimensionale Streuer 23 verschmiert die Abbildung der Rasterelemente 14, 15 so in der Richtung der Ordinate Y, dass sich über die ganze Breite der gesamten lichtempfindlichen Fläche der Detektorenanordnung 4 wenigstens ein Teil des abgelenkten bzw. gebeugten Lichts 17 von beiden Rasterelementen 14 und 15 erstreckt. Eine anisotrope Mattstruktur ein einfaches Beugungsgitter mit einer Spatialfrequenz weniger als 150 Linien/mm oder Zylinderlinsen haben diese Eigenschaft, Licht nur parallel zu einer Ebene zu streuen. Zum Erkennen der vom Informationsstreifen 2 erzeugten Unterschiede in der Polarisation des Lichts ist ein Polarisationsfilter als Analysator 22 zwischen dem Abbildungselement 3 und der Detektorenanordnung 4 angeordnet. In die Plastikfolie des Analysators 22 (Typ Polaroid®) kann die Reliefstruktur des eindimensionalen Streuers 23 direkt eingeprägt werden, so dass der Analysator 22 und der eindimensionale Streuer 23 ein einziges Bauteil bilden.

Die Leseanordnung weist eine Auswerteeinheit 24 auf, die den Lesezyklus steuert und die für eine Erkennung der Information eingerichtet ist. Dazu ist die Auswerteeinheit 24 über Steuerleitungen 25, 26 mit den Beleuchtungseinrichtungen 5 und 6 verbunden, damit die Beleuchtungseinrichtungen 5 und 6 von der Auswerteeinheit 24 sequentiell einund ausschaltbar sind. Die Beleuchtungsrichtung α bzw. β und die Qualität des Lichts im Beleuchtungsstrahl 20 bzw. 21 ist für die Beleuchtung des Lesebereichs 12 durch das Einschalten der Beleuchtungseinrichtung 5 bzw. 6 festgelegt. Die Detektorenanordnung 4 ist über Signalleitungen 27 mit der Auswerteeinheit 24 verbunden. Die Auswerteeinheit 24 sendet über die eine Signalleitung 27 ein Lesesignal an die Detektorenanordnung 4 und bewirkt das Auslesen von Detektorsignalen S(1) bzw. S(2), die den von Photodetektoren 28 registrierten Helligkeitswerten des auf den lichtempfindlichen Flächen der Detektorenanordnung 4 abgebildeten Informationsstreifens 2 entsprechen. Die Detektorsignale S(1) bzw. S(2) gelangen über die anderen Signalleitungen 27 in einen der beiden Datenspeicher 29, 30 der Auswerteeinheit 24.

In einer Ausführung ist die Leseebene 7 nicht mit der übrigen Leseanordnung verbunden. Bei dieser Ausführung weist die Leseanordnung ein Fenster für die Begrenzung des Lesebereichs 12 auf. Der Rahmen 31 des Fensters, der Teil des Gehäuses 16 ist, dient als Auflage für das Dokument 1, wobei die Oberfläche 11 (Figur 1a) des Dokuments 1 mit dem Informationsstreifen 2 zum Ablesen gegen das Fenster gerichtet ist. Bei einer Ausführung ohne den Rahmen 31 ist die Leseebene 7 vom Gehäuse 16 beabstandet. Von Hand kann das Dokument 1 im beleuchteten Lesebereich 12 leicht so lange ausgerichtet werden, bis die Leseanordnung die Information richtig vom Informationsstreifen 2 maschinell ausliest. Ein Monitor 32, der mit der Auswerteeinheit 24 über eine Leitung 33 verbunden ist, ermöglicht das Erkennen des erfolgreichen Lesens des Informationsstreifens 2. Im einfachsten Fall ist der Monitor 32 ein Rot/Grün-Signal, das bei richtig erkannter Information von Rot auf Grün wechselt. Die Leitung 33 kann die ausgelesene Information auch an weitere, hier nicht gezeigte Geräte weiterleiten, die beispielsweise eine Sperre freigeben, die ausgelesene Information zu einer Zentrale senden und gegebenenfalls zusätzliche, der ausgelesenen Information zugehörige Daten von der Zentrale abfragen usw.

Der Lesezyklus umfasst mit Vorteil zwei Lesephasen, um die Information aus dem Informationsstreifen 2 zu lesen. Zwei Lesephasen sind jeweils durch eine Lesepause getrennt, in der die erfasste Information von der Auswerteeinheit 24 verarbeitet wird. Die Auswerteeinheit 24 steuert über das Ein- und Ausschalten der Beleuchtungseinrichtung 5 bzw. 6 die Beleuchtungsrichtung α, β und/oder die Qualität des im Beleuchtungsstrahl 20 bzw. 21 emittierten Lichts. Jede Lesephase unterscheidet sich von der vorhergehenden durch die Beleuchtungsrichtung α, β und/oder die Qualität des emittierten Lichts. Zu Beginn der Lesephase wird die Beleuchtungseinrichtung 5 bzw. 6 eingeschaltet und der Lesebereich 12 ausgeleuchtet. Am Ende der Lesephase bewirkt die Auswerteeinheit 24 das Auslesen und Übermitteln der von einer Vielzahl der Photodetektoren 28 registrierten Helligkeitswerte über die Signalleitung 27 und schaltet die Beleuchtungseinrichtung 5 bzw. 6 aus. Die Auswerteeinrichtung 24 erhält eine erste Sequenz von Signalen, deren Signalwerte die Helligkeitsverteilung auf der lichtempfindlichen Flächen der Detektorenanordnung 4 während der ersten Lesephase wiedergeben, in der die Belichtung des Lesebereichs 12 aus der ersten Beleuchtungsrichtung α und/oder mit der ersten Qualität des emittierten Lichts erfolgt und in das Abbildungselement 3 reflektiertes Licht 17 von den im optischen Verhalten nicht veränderten Rasterelementen 14 (Figur 1a) der ersten Zeile stammt. In der anschliessenden zweiten Lesephase empfängt die Auswerteeinheit 24 eine zweite Sequenz von Signalen, deren Signalwerte der Helligkeitsverteilung während der Belichtung des Lesebereichs 12 aus einer zweiten Beleuchtungsrichtung β und/oder mit einer zweiten Qualität des emittierten Lichts entsprechen und das reflektierte Licht 17 von den im optischen Verhalten nicht veränderten Rasterelementen 15 (Figur 1a) der zweiten Zeile stammt.

Die Leseanordnung ist der Technologie des Informationsstreifens 2 anzupassen. In einer einfachen Ausführung ist der Informationsstreifen 2 ein eingefärbtes, diffus streuendes Substrat, z.B. Papier, Kunststoff, Metall usw., wobei die Rasterelemente 14 und 15 komplementäre Farben (z.B. rot - grün) aufweisen. Durch einen Aufdruck in einer die Farben rot und grün absorbierenden Farbe (z. B. schwarz) sind die Rasterelemente 14, 15 in ihrem optischen Verhalten veränderbar. Entsprechend der Lesephase ist die Beleuchtungseinrichtung 5 bzw. 6 eingeschaltet, die unter einem Beleuchtungswinkel α bzw. β den Lesebereich 12 mit rotem bzw. mit grünem Licht so beleuchtet, dass das im Lesebereich 12 diffus gestreute, vom Abbildungselement 3 eingefangene Licht die roten bzw. die grünen Rasterelemente 14 bzw. 15 mit einem hohen Helligkeitswert auf die lichtempfindliche Flächen der Detektorenanordnung 4 abbildet. Im Gegensatz dazu ist der Helligkeitswert des eingefangenen Streulichts von den schwarz bedruckten Rasterelementen 14, 15 oder von den grünen Rasterelementen 15 im roten Licht bzw. den roten Rasterelementen 14 im grünen Licht gering verglichen mit den hohen Helligkeitswerten.

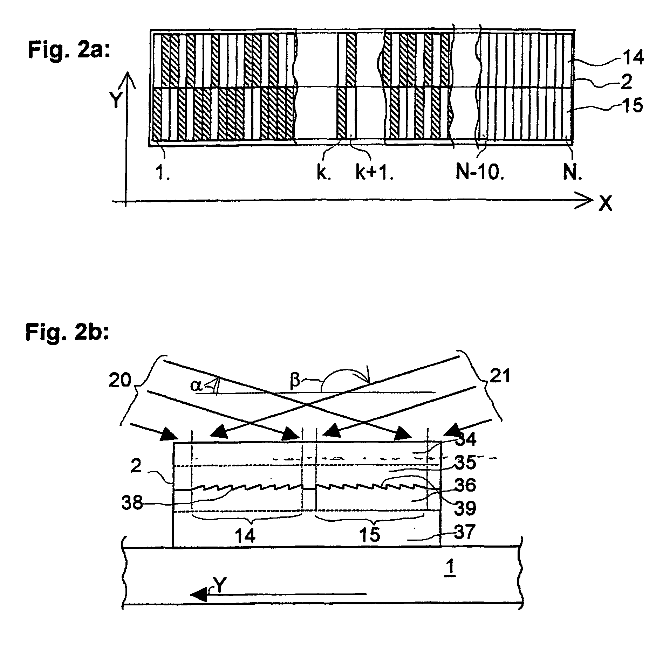

Die Figur 2a zeigt ein Beispiel eines zweizeiligen Informationsstreifens 2 mit N Rasterpaaren. Das k-te Rasterpaar ist aus einem Rasterelement 14 der ersten Zeile und einem Rasterelement 15 der zweiten Zeile mit demselben Wert für die Abszisse Xₖ gebildet. Jedes Rasterpaar bietet Platz für ein Bit einer digitalen Information, wobei beim Beschreiben des Informationsstreifens 2 das optische Verhalten eines der beiden Rasterelemente 14 bzw. 15 verändert wird, was in der Zeichnung der Figur 2a aus technischen Gründen mit einer Schraffur der Fläche des Rasterelements 14 bzw. 15 dargestellt ist. Da nur zwei aus vier möglichen Zuständen des Rasterpaares benutzt werden, kann eine eingeschriebene Information nicht verändert werden. Wenn beide Rasterelemente 14 und 15 in ihrem optischen Verhalten verändert sind, deutet dies auf eine Manipulation oder übermässigen Gebrauch des Dokuments 1 (Figur 1a) hin. Ein nicht beschriebener Informationsstreifen 2 zeichnet sich durch unveränderte Rasterelemente 14 und 15 im gleichen Rasterpaar aus, wie z.B. die Rasterpaare N-10 bis N.

Das k-te Rasterpaar, dessen Rasterelement 15 der zweiten Zeile verändert ist, stellt beispielsweise den Bitwert "1" und das k+1-te Rasterpaar, dessen Rasterelement 14 der ersten Zeile verändert ist, den Bitwert "0" dar. Die erste Zeile des Informationsstreifens 2 weist daher dieselbe Information auf wie die zweite Zeile, jedoch ist bei der zweiten Zeile die Abfolge der im optischen Verhalten veränderten und der unveränderten Rasterelemente 15 gegenüber der Abfolge der veränderten und der unveränderten Rasterelemente 14 in der ersten Zeile vertauscht bzw. invertiert. Werden die beiden Zeilen nacheinander gelesen, ist diese Inversion der Abfolge leicht maschinell zu überprüfen. In der ersten Lesephase wird die erste Zeile vom ersten Rasterpaar her gelesen; die erste Sequenz beginnt mit "uwuvuuvuuuvvuvuu ...", während in der zweiten Lesephase die zweite Zeile in der gleichen Richtung gelesen der Anfang der zweiten Sequenz "vuuvuvvuvvvuuvuvv ..." lautet, wobei "v" für ein verändertes Rasterelement 14 bzw. 15 und "u" für ein unverändertes steht. Durch Invertieren der zweiten Sequenz (Vertauschen von v und u) und Vergleichen mit der ersten Sequenz wird die ausgelesene Information auf richtiges Ablesen und auf Echtheit überprüft. Die resultierende Sequenz "10010110111001011..." ist die erkannte Information unter Berücksichtigung der Zuordnung der Bitwerte.

Die Sequenz der Information ist in einem Beispiel zwischen einer vorbestimmten Startsequenz und Stoppsequenz von beispielsweise je 8 Bit angeordnet. Die Startsequenz zeigt der Leseanordnung an, dass eine anschliessende Information von vorbestimmter Länge in der richtigen Reihenfolge zur Stoppsequenz hin gelesen wird. Wird die Stoppsequenz zuerst gelesen, signalisiert sie der Auswerteeinheit 24 das Lesen der anschliessenden Information in der umgekehrten Reihenfolge. Auch kann die Information als Palindrom angeordnet sein, wobei in der ersten Hälfte die ganze Information enthalten ist, die sich in der zweiten Hälfte in umgekehrter Reihenfolge der Bits wiederholt. In einer andern Ausführung wird bei der Herstellung des Informationsstreifens 2 die Start- und Stoppsequenz fest vorgegeben und braucht nicht beim Einschreiben der Information erzeugt werden.

Eine höhere Informationsdichte und ein besseres Signal zu Hintergrund-Verhältnis besitzen die Informationsstreifen 2, deren Rasterelemente 14, 15 feine Reliefstrukturen aufweisen, die aus einer vorbestimmten Richtung einfallendes Licht im Lesebereich mit grosser Intensität in die durch das Abbildungselement 3 vorbestimmte Richtung reflektierend beugen. Die Gitterfurchen der feinen Reliefstrukturen sind mit Vorteil im wesentlichen parallel zur Abszissenachse X ausgerichtet. Die grosse Intensität des an den Rasterelementen 14, 15 gebeugten Lichts 17 (Figur 1b) erlaubt kleinere Rasterelemente 14, 15 für den Informationsstreifen 2 zu verwenden, ohne dass eine Einbusse in der Lesesicherheit in Kauf genommen werden muss. Typisch misst ein Rasterpaar in der Breite 0,5 bis 3 mm und in der Länge 0,1 bis 0,5 mm.

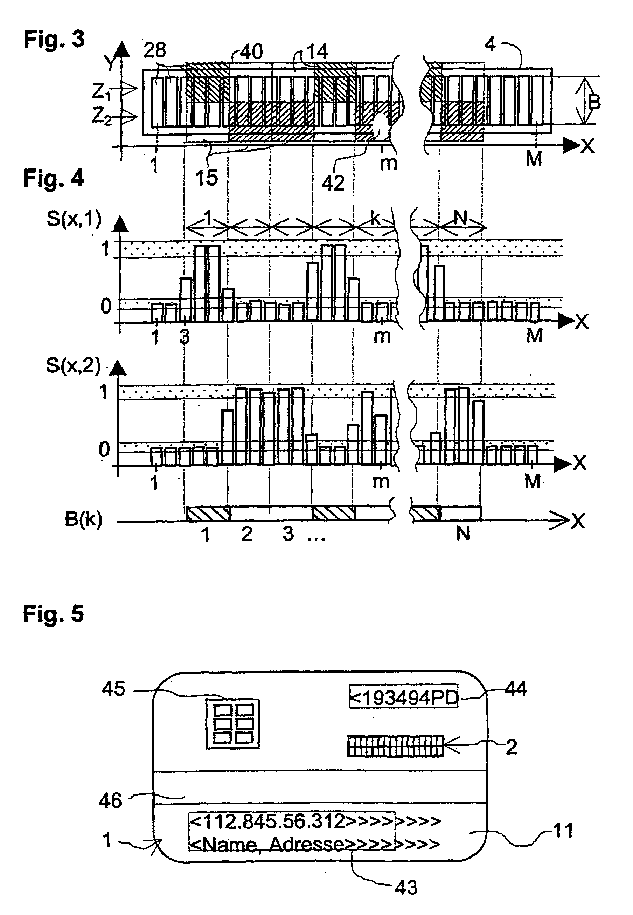

Die Leseanordnung nach der Figur 1b ist für das Lesen der Informationsstreifen 2 mit einer Breite von 1,5 mm und eine Gesamtlänge von 25 mm mit einer Kapazität von 160 Bits für die Information und zusätzlich je 8 Bit für das Startund Stoppsignal eingerichtet und ist sehr kompakt auf kleinem Raum realisierbar. Sie setzt sich wenigstens aus folgenden Bauteilen zusammen:
a) Die Detektorenanordnung 4 ist ein unter der Bezeichnung ILX511 2048-pixel CCD Linear Image Sensor von SONY erhältlicher Baustein. Die Anzahl der Photodetektoren 28 ist M = 2048. Sie weisen je eine lichtempfindliche Fläche von 14 µm x 200 µm auf, wobei die lineare Einteilung längs der Abszissenachse X (Figur 3) 14 µm und die Gesamtlänge 28,7 mm beträgt;
b) das Abbildungselement 3 ist der SELFOC® "Lens Array" SLA-20B, einem zweireihigen Bündel aus 6,7 mm langen, dicken Linsen von 0,8 bis 1,2 mm Durchmesser, bei denen der Abstand H zwischen der Objektebene und der Bildebene etwa 15, 4 mm beträgt und die Abbildung im Verhältnis 1:1 ist;
c) die Beleuchtungseinrichtungen 5, 6 sind symmetrisch zur Symmetrieebene 13 angeordnet und sind mittels einer linearen Reihe von Leuchtdioden gebildet. Deren Farblicht und Beleuchtungsstrahl 20, 21 sind auf die Rasterelemente 14, 15 abgestimmt. Um das Licht aus den punktförmigen Leuchtdioden in der Leseebene 12 zu homogenisieren, weist die Optik 19 uniform streuende Eigenschaften auf;
d) der eindimensionale Streuer 23 und optional der Analysator 22 sowie
e) die Auswerteeinrichung 24 mit Monitor 32.

Die in der Abszissenachse X gemessene Länge jedes Rasterpaares k (Figur 2a) beträgt somit 0.14 mm, die von jeweils etwa 10 nebeneinander in einer Linie angeordneten Photodetektoren 28 abgetastet wird. Die Leseanordnung kann in ein Gehäuse 16 mit den ungefähren Abmessungen 30 x 40 x 20 mm untergebracht werden; dies erleichtert den Einbau in andere hier nicht gezeigte Geräte, z.B. Lesegeräte für IC-Karten usw. Der Vorteil ist die kompakte, kostengünstige Bauweise der Leseanordnung. Das Auslesen und Erkennen der Information erfolgt innerhalb ein paar Millisekunden, so dass der Informationsstreifen 2 auch von einem sich bewegenden Dokument 1 abgelesen werden kann. Mit Vorteil erfolgt die Bewegung in Richtung der Ordinate Y (Figur 1a), also quer zum Informationsstreifen 2.

Die Figur 2b zeigt den Informationsstreifen 2 in einer Ausführung mit Reliefstrukturen im Querschnitt. Der Informationsstreifen 2 ist ein Laminat aus Kunststoffschichten 34, 35, 36, 37. Wenigstens die Deckschicht 34 und die Prägeschicht 35 sind für das Licht der Beleuchtung transparent, damit die Information durch diese beiden Schichten 34, 35 hindurch auszulesen ist. Der detaillierte Aufbau des Laminats ist z.B. in der EP 0 401 466 B1 beschrieben. Die Deckschicht 34 weist wenigstens eine hohe Kratzfestigkeit auf, wie dies von Lacken, insbesondere von UV gehärteten Lacken oder beispielsweise von PC, PETF oder anderen Folien auch bei Dicken im Mikrometerbereich bekannt ist Die Prägeschicht 35 und die Schutzschicht 36 schliessen an ihrer gemeinsamen Grenzfläche feine Reliefstrukturen als Beugungsstrukturen 38, 39 ein. Ein Sprung im Brechungsindex an der Grenzfläche verstärkt die Intensität der Beugungseffekte an den Beugungsstrukturen 38, 39. Dies bewirkt eine 10 bis 500 nm starke zusätzliche Schicht aus Metall, Halbleiter oder einem Dielektrikum in der Grenzfläche oder allein durch Verwendung von Materialien für die Prägeschicht 35 und die Schutzschicht 36, die eine Differenz im Brechungsindex aufweisen. Die Klebeschicht 37 verbindet das Laminat mit dem Dokument 1. Bewährt haben sich sowohl Kaltkleber als auch Heisskleber. Die Klebeschicht 37 erübrigt sich, wenn das Material der Schutzschicht 36 selber ein Kleber ist. Das Material des Informationsstreifens 2 wird als Band hergestellt, von dem passende Stücke abgetrennt und mit dem Dokument 1 verbunden werden. Ist die Deckschicht 34 und die Prägeschicht 35 aus demselben Material gefertigt, ist keine Grenze zwischen der Deckschicht 34 und der Prägeschicht 35 erkennbar. Beispielsweise kann der Informationsstreifen 2 unauffällig innerhalb eines Hologrammbildes oder in einem Mosaik aus anderen Beugungselementen eingebettet sein, deren Gitterparameter sich von denen der beiden Beugungsstrukturen 38 und 39 derart unterscheiden, dass die anderen Beugungselemente kein Licht der Beleuchtungseinrichtungen 5, 6 in das Abbildungselement 3 ablenken.

Alle Rasterelemente 14 weisen im unbeschriebenen Zustand des Informationsstreifens 2 die gleiche Beugungsstruktur 38 und die Rasterelemente 15 die gleiche Beugungsstruktur 39 auf. Die Beugungsstrukturen 38 und 39 müssen sich wenigstens in einem Parameter der Gitterstruktur unterscheiden, wie Spatialfrequenz, Azimut, Gitterprofil usw. Die Beugungsstruktur 38 bzw. 39 erfüllt die Anforderung, den Beleuchtungsstrahl 20 bzw. 21 in das Abbildungselement 3 zu beugen und den andern Beleuchtungsstrahl 21 bzw. 20 so zu beugen, dass kein oder unterscheidbar weniger Licht des Beleuchtungsstrahls 21 bzw. 20 in das Abbildungselement 3 gelangt. Der unbeschriebene Informationsstreifen 2 weist keine Information auf, da alle Beugungsstrukturen 38, 39 optisch aktiv sind. Beim Einschreiben der Information werden die nicht mehr benötigten Beugungsstrukturen 38, 39 in ihrem optischen Verhalten irreversibel verändert, so dass von den nicht benötigten Beugungsstrukturen 38, 39 allenfalls Streulicht von geringer Intensität in das Abbildungselement 3 gelangt. Verfahren und Mittel zum irreversiblen Verändem des optischen Verhaltens der Beugungsstrukturen 38, 39 sind in der eingangs erwähnten EP 0 718 795 A1. Spalte 4, Zeile 33 bis Spalte 6, oben beschrieben.

Die Rasterpaare der Start- und Stoppsequenz sind in einer Ausführung des Informationsstreifens 2 bereits bei der Herstellung fest kodiert, wobei anstelle der im optischen Verhalten veränderten Beugungsstrukturen 38 bzw. 39 im Rasterelement 14 bzw. 15 ein Spiegel oder eine dritte Reliefstruktur vorhanden ist. Die dritte Reliefstruktur beugt die Beleuchtungsstrahlen 20, 21 nicht in das Abbildungselement 3 (Figur 1 b) oder streut sie als Mattstruktur diffus. In einer weiteren Ausführung des Informationsstreifens 2 sind alle Rasterelemente 14, 15 und somit die ganze Information auf die gleiche Art wie die Start - und Stoppsequenz fest kodiert. Die Rasterelemente 14, 15 einer Ausführung des Informationsstreifens 2 mit fest kodierter Information kann auch bloss aus einer Zeile bestehen, wobei in dieser Zeile anstelle der für die Information nicht benötigten ersten Beugungsstrukturen 38 die zweiten Beugungsstrukturen 39 angeordnet sind. Der Informationsstreifen 2 dieser Ausführung ist mit derselben Leseanordnung auslesbar.

In einer anderen Ausführung des Informationsstreifens 2 sind die Beugungsstrukturen 38, 39 direkt in das Grundmaterial des Dokuments aus Laminat, Plastik, Metall usw. eingearbeitet. Das Grundmaterial ist aus den Schichten 34, 35 gebildet. Das Auslesen erfolgt durch die transparente Schutzschicht 36.

Im gezeigten Beispiel unterscheiden sich die asymmetrischen Beugungsstrukturen 38 und 39 nur im Azimut, wobei die Differenz 180° beträgt, d.h. sie sind spiegelsymmetrisch angeordnet. Die beiden Beleuchtungseinrichtungen 5 und 6 sind symmetrisch zur Symmetrieebene 13 (Figur 1a) angeordnet und sind zum Erzeugen von einfarbigem Licht eingerichtet. Befindet sich der Informationsstreifen 2 im Lesebereich 12 (Figur 1a), der in der ersten Lesephase mit Licht des ersten Beleuchtungsstrahls 20 aus der ersten Beleuchtungsrichtung α ausgeleuchtet ist, sammelt das Abbildungselement 3 (Figur 1a) nur das an der Beugungsstruktur 38 der unveränderten Rasterelemente 14, 15 gebeugte und reflektierte Licht 17 (Figur 1b) und bildet die Helligkeitsverteilung auf den lichtempfindlichen Flächen der Detektorenanordnung 4 (Figur 1a) ab. Der erste bzw. zweite Beleuchtungsstrahl 20 bzw. 21 wird in der ersten bzw. zweiten Lesephase an der ersten bzw. zweiten Beugungsstruktur 38 bzw. 39 mit einer hohen Effizienz in die plus erste Ordnung gebeugt und wird gleichzeitig an der zweiten bzw. ersten Beugungsstruktur 39 bzw. 38 mit einer deutlich geringeren Effizienz in die minus erste Ordnung gebeugt. Das Abbildungselement 3 sammelt das gebeugt reflektierte Licht 17 (Figur 1b) und erzeugt auf den lichtempfindlichen Flächen der Detektorenanordnung 4 deutlich zu unterscheidende Helligkeitswerte. Allfälliges Streulicht, das vom Abbildungselement 3 erfasst wird, weist in den beiden Lesephasen nur geringe Intensitätsunterschiede auf und stört die Helligkeitsverteilung auf der lichtempfindlichen Flächen der Detektorenanordnung 4 nicht. Unterscheiden sich die asymmetrischen Beugungsstrukturen 38 und 39 zusätzlich in ihren Spatialfrequenzen, können diese derart gewählt werden, dass der an der zweiten bzw. ersten Beugungsstruktur 39 bzw. 38 gebeugte erste bzw. zweite Beleuchtungsstrahl 20 bzw. 21 der minus ersten Ordnung nicht vom Abbildungselement 3 erfasst wird.

Wenn sich die Beugungsstrukturen 38 und 39 nur in der Spatialfrequenz unterscheiden, müssen die Beleuchtungsrichtungen α, β und/oder die Wellenlängen λ₁, λ₂ des Beleuchtungsstrahls 20, 21 angepasst sein. Die Wellenlängen λ₁, λ₂ und die Beleuchtungsrichtungen α, β legen die Spatialfrequenz für die Beugungsstrukturen 38 und 39 fest.

Aus der WO 97/19821 bekannte Beugungsstrukturen 38, 39 mit niederen Spatialfrequenzen (50 bis 250 Linien/mm) und mit einem Gitterprofil mit einer Höhe von 0.7 µm bis 1.5 µm zeigen ein achromatisches Beugungverhalten, d.h. auch ein polychromatisches Licht kann zur Beleuchtung des Lesebereichs 12 eingesetzt werden, wenn solche Beugungsstrukturen 38, 39 das eng gebündelte, polychromatisch gebeugte Licht in das Abbildungselement 3 ablenken.

In der WO 98/10324 sind Beugungsgitter beschrieben, die sich nur in ihrem Polarisationsvermögen unterscheiden. Sind solche Beugungsgitter für die Beugungsstrukturen 38, 39 gewählt, erfolgt die Beleuchtung der Leseebene 12 (Figur 1a) mit verschieden polarisiertem Licht unter Verwendung eines Polarisationsfilters in der Optik 19 (Figur 1b) der Beleuchtungsstrahlen 20, 21. In einer andern Ausführung ist der Polarisationsfilter als Analysator 22 zwischen dem Abbildungselement 3 und der Detektorenanordnung 4 angeordnet und die Beleuchtung des Lesebereichs 12 (Figur 1a) erfolgt mit unpolarisiertem Licht.

Sind die Beugungsstrukturen 38, 39 symmetrisch, können die Beleuchtungseinrichtungen 5, 6 auch auf der gleichen Seite der Symmetrieebene 13 angeordnet sein. Unterscheidet sich die Beleuchtung des Lesebereichs 12 nur in der Wellenlänge des unter der Beleuchtungsrichtung α in den Lesebereich 12 (Figur 1a) einfallenden Lichts, wird mit Vorteil eine lineare Anordnung von Leuchtdioden gewählt, wobei sich die Leuchtdioden in der Farbe des emittierten Lichts unterscheiden. Die Leuchtdioden der verschiedenen Farben wechseln sich in der linearen Anordnung so ab, dass der Lesebereich 12 gleichmässig in einer Farbe ausgeleuchtet wird, wenn in einer Lesephase gleichzeitig nur die Leuchtdioden der gleichen Farbe eingeschaltet sind. Für die lineare Anordnung eignen sich auch Leuchtdioden, die Licht in zwei oder mehreren Farben emittieren, wobei die Farbe extern angesteuert einstellbar ist. Ein gleichzeitiges Ansteuern der Farben erzeugt ein polychromatisches Licht.

In der Figur 3 ist die lichtempfindliche Seite der Detektorenanordnung 4 mit einem, hier aus darstellerischen Gründen gestrichelt gezeichnetes, durch das Abbildungselement 3 (Figur 1b) ohne den eindimensionalen Streuer 23 (Figur 1b) erzeugtes Abbild 40 der Rasterpaare des Informationsstreifens 2 (Figur 2a) gezeigt. In der ersten Lesephase wird der Lesebereich 12 (Figur 1a) mit der Beleuchtungseinrichtung 5 (Figur 1a) beleuchtet. Im Abbild 40 sind die in der Zeichnung schräg schraffierten, im optischen Verhalten unveränderten Rasterelemente 14 der ersten Zeile mit der Ordinate Y = Z₁ Zonen mit hoher Lichtintensität. Die ohne Schraffur dargestellten, im optischen Verhalten veränderten Rasterelemente 15 der ersten Zeile und. alle Rasterelemente 15 der zweiten Zeile mit der Ordinate Y =Z₂ werfen Licht 17 (Figur 1 b) mit wenigstens 50 % geringerer Intensität auf die Detektorenanordnung 4 und werden als dunkle Zonen abgebildet. In der zweiten Lesephase ist die Beleuchtungseinrichtung 6 (Figur 1 a) eingeschaltet, damit im Abbild 40 nur die schraffierten, im optischen Verhalten unveränderten Rasterelemente 15 der zweiten Zeile hell abgebildet werden.

Die kommerziell erhältlichen, einzeiligen Detektorenanordnungen 4 weisen für die Breite B einen Wert zwischen 7 µm und 200 µm auf. Die Unterteilung längs der Abszissenachse X weist eine Schrittweite ("pitch") von 7 µm, 14 µm oder mehr auf, so dass jeder Photodetektor 28 daher eine lichtempfindliche Fläche von der Breite B mal die Schrittweite besitzt. Der Informationsstreifen 2 soll ohne hohe Anforderungen an das Ausrichten im Lesebereich 12 mit hoher Sicherheit lesbar sein. Dieser Vorteil wird erreicht, indem die Breite B der lichtempfindlichen Fläche der Photodetektoren 28 grösser als 0,1 mm ist und die Abbildung 38 in der Ordinatenrichtung Y in der Breite B zusätzlich mittels des eindimensionalen Streuers 23 (Figur 1b) verschmiert ist, um eine Verschiebung senkrecht zur Symmetrieebene 13 (Figur 1b) zu tolerieren. Weiter bestimmt die Feinheit der Unterteilung längs der Abszissenachse X das Auflösungsvermögen der Detektorenanordnung 4 in der Abszissenachse X. Damit die Detektorenanordnung 4 die Unterteilung des Informationsstreifens 2 richtig erfasst, auch wenn die Unterteilung in die N Rasterpaare und die Einteilung der M Photodetektoren 28 nicht genau längs der Abszissenachse X ausgerichtet und/oder nicht kommensurabel sind, muss die Unterteilung der Detektorenanordnung 4 in der Abszissenachse X so fein sein, dass das Abbild 40 jedes der N Rasterpaare wenigstens drei Photodetektoren 28 überdeckt. Für den Informationsstreifen 2 mit N Rasterpaaren beträgt die Anzahl M der Photodetektoren 28 wenigstens das Dreifache von N. Mit Vorteil ist die Länge der Detektorenanordnung 4 grösser als die Länge des zu lesenden Informationsstreifens 2, damit der Informationsstreifen 2 zum Ablesen nicht längsweise im Lesebereich 12 genau ausgerichtet werden muss. Somit liegen die ersten und die letzten Photodetektoren 28 ausserhalb des Abbilds 40 und erhalten nur Streulicht. Dies erlaubt eine Messung der Länge des Informationsstreifens 2.

Anstelle einer einzeiligen Detektorenanordnung 4 kann mit Vorteil eine mehrzeilige zum Einsatz kommen, z.B. mit lichtempfindlichen Flächen der Photodetektoren 28 von je 14 µm x 14 µm in 128. Zeilen. Diese etwas teuere Lösung erlaubt eine grössere Toleranz gegen ein schiefes Ausrichten des Informationsstreifens im Lesebereich 12, da mittels einer elektronischen Korrektur die Verdrehung gegenüber der Symmetrieebene 13 (Figur 1) kompensiert werden kann.

Die bislang betrachteten Detektorenanordnungen 4 sind nicht zum Erkennen der Farbanteile im Licht 17 eingerichtet. anstelle der schwarz - weiss empfindlichen Detektorenanordnungen 4 ist auch eine farbempfindliche Detektorenanordnung 4 einsetzbar, wie beispielsweise der CCD Linear Sensor ILX522K von SONY. Integrierte Farbfilter vor den Photodetektoren 28 ermöglichen, das farbige Abbild 40 in den drei Primärfarben blau, grün und rot getrennt mit Farbsignalen der Photodetektoren 28 zu erfassen und zu analysieren. Unterscheiden sich die Beugungsstrukturen 38 (Figur 2b) und 39 (Figur 2b) nur in der Spatialfrequenz, so genügt eine einzige polychromatische Beleuchtungseinrichtung 5, die wenigstens Licht von durch die Beugungsstrukturen 38 und 39 und die Beleuchtungsrichtung α (Figur 2b) vorbestimmten Wellenlängen λ₁, λ₂ emittiert, um die Information auszulesen und auf Echtheit zu prüfen. Die Leseanordnung in dieser Ausführung weist einen modifizierten Lesezyklus auf. Auf der einzigen Lesephase folgt in der Auswerteeinheit 24 (Figur 1b) eine Filterung der Farbsignale des farbigen Abbilds 40 entsprechend der vorbestimmten Wellenlängen λ₁, λ₂ und die Zuordnung der gefilterten Farbsignale zu den Rasterelementen 14, 15, um zwei Sequenzen der Detektorsignale S(1) bzw. S(2) zu bilden. Die Detektorsignale S(1), S(2) entsprechen den Detektorsignalen S(1), S(2) der schwarz - weiss empfindlichen Detektorenanordnung 4. Die polychromatische Beleuchtung des Lesebereichs 12 (Figur 1a) unter der Beleuchtungsrichtung α muss hierzu nicht dauernd ein - und ausgeschaltet werden.

In der zu der Figur 3 gehörigen Figur 4 sind die erste Sequenz von Detektorsignalen S(x,1) für die erste Lesephase und die zweite Sequenz von Detektorsignalen S(x,2) für die zweite Lesephase dargestellt, die von den M Photodetektoren 28 (Figur 3) nacheinander erzeugt werden. Zur Verdeutlichung der Zugehörigkeit der Detektorsignale S(x,1) bzw. S(x,2) zu den N Rasterpaaren im Abbild 40 (Figur 3) sind punktierte vertikale Linien bis zu den Diagrammen in der Figur 4 durchgezogen. Die Detektorsignale S(x,1) bzw. S(x,2) werden nach jeder Lesephase durch die Signalleitung 27 (Figur 1b), z.B. seriell, an die Auswerteeinheit 24 (Figur 1b) übermittelt, nachdem die Auswerteeinheit 24 das Lesesignal durch die Signalleitung 27 (Figur 1b) an die Detektorenanordnung 4 (Figur 1b) gesandt hat, und in digitalisierter Form im Speicher 29 (Figur 1b) bzw. 30 (Figur 1b) abgelegt. In der zweiten Lesepause erfolgt zusätzlich die Auswertung der gespeicherten Detektorsignale S(x,1), S(x,2). Anschliessend beginnt der Lesezyklus von neuem. Eine schematische Beschreibung skizziert die Auswertung.

Ein Rechner 41 (Figur 1 b) der Auswerteeinheit 24 (Figur 1b) bereitet zunächst die Sequenzen S(x,1) bzw. S(x,2) für die Erkennung der Information auf. Dazu werden die Sequenzen S(x,1) bzw. S(x,2) typischerweise gefiltert und allfällige ortsabhängige Amplituden undloder Offsets korrigiert. Liegen die derart erhaltenen Signale innerhalb festgelegter Bereiche von Signalniveaus "1" oder "0", so wird für x = 1 bis M allen Detektorsignalen S(x, 1) bzw. S(x,2) der entsprechende Bitzustand "1" oder "0" zugeordnet und als Bit - Signal S(x,1) bzw. S(x,2) gespeichert. Liegen örtlich eines oder mehrere der Detektorsignale S(x,1) bzw. S(x,2) zwischen den beiden Niveaus, so interpretiert der Rechner 41 dies als Folge von teilweise zerstörten Rasterelementen 14, 15 und ordnet diesen Signalen einen weiteren Zustand "undefiniert" zu. In der Zeichnung der Figur 4 sind die Bereiche für die Signalniveaus "0", "1" als schattierte Bänder dargestellt.

In der Zeichnung der Figur 3 ist im Abbild 40 in der zweiten Zeile Z₂ beim fünften Rasterelement 15 von links als Beispiel ein als Folge einer Beschädigung des Informationsstreifens 2 (Figur 1 a) entstandener "blinder Fleck" 42 vorhanden, der die Lichtintensität dieses Rasterelements 15 im Abbild 40 in der zweiten Lesephase reduziert. Das Detektorsignal S(m,2) fällt daher zu niedrig aus und der Rechner 41 (Figur 1b) ordnet daher dem Bit - Signal S(m,2) den Zustand "undefiniert" zu. Weitere "undefinierte" Zustände können im Bereich der Grenzen zwischen verschiedenen Werten der Lichtintensität im Abbild 40 auftreten, da die Unterteilung in die N Rasterelemente 14, 15 in der Regel nicht mit der Einteilung der M Photodetektoren 28 zusammenfällt, z.B. beim Signal S(3,1) des dritten Photodetektors 28. Da die Abbilder 38 in den beiden Lesephasen gegenüber der Detektorenanordnung 4 gegeneinander nicht verschoben sind, ist ein weiterer Vorteil der Leseanordnung, weil die Bit-Signale S(x, 1) und S(x,2) für jedes x dem gemeinsamen Rasterpaar k zugeordnet sind und aus den Sequenzen der Bit - Signale S(x, 1) und S(x,2) eine Paarsequenz P(x) von x Paaren P(x) gebildet werden kann. Im idealen Fall gibt es in der Paarsequenz P(x) nur vier Wertkombinationen der Bit-Signale S(x, 1) und S(x,2): die Wertkombination mit S(x, 1) = 1 und S(x,2) = 0 (="1,0"), die Wertkombination mit S(x, 1 ) = 0 und S(x,2)= 1(="0,1") und die Wertkombinationen S(x, 1) = S(x,2) = 1 (="1,1") und S(x, 1) = S(x,2) = 0 (="0,0"). Schon ein Paar P(x) mit der Wertkombination "1,1" weist auf einen unvollständig beschriebenen Informationsstreifen 2 hin und veranlasst den Rechner 41 (Figur 1 b) z.B. zum Abbruch der Auswertung und/oder zum Anzeigen des Fehlers auf dem Monitor 32 (Figur 1 b). Die Wertkombination"0,0" darf regulär ausschliesslich an beiden Enden der Paarsequenz P(x) auftreten, da die Detektorenanordnung 4 den Informationsstreifen 2 überragt. Sie bilden zwei Gruppen von i bzw. j aufeinanderfolgenden Endpaaren. Beim Beispiel der Figur 4 sind dies die Signale

S mit x=1, 2 und x = M - 3, M - 2, M -1, M. Zwischen den beiden Gruppen der Endpaare ist die Information in den M - (i + j) Elementen der Paarsequenz P(x) enthalten, die sich gleichmässig auf die vorbestimmte Anzahl N, beispielsweise N = 176, N = 160 usw., der Rasterpaare des Informationsstreifens 2 aufteilen und die N Elemente einer Bitfolge B(k), der Information, bestimmen, wobei k die Werte von 1 bis N durchläuft. Die Wertkombinationen "1,0" bzw. "0,1" der dem gleichen Element B(k) zugeordneten Paare der Paarsequenz P(x) bestimmen den Inhalt des Elementes B(k), weist beispielsweise für ein Element B(k) die Mehrzahl der zugeordneten P(x) die Wertkombination "1,0" auf, ist B(k) ="1", während für die Wertkombination "0,1" B(k) = "0" gesetzt wird. In der Zeichnung der Figur 4 ist die aus den Sequenzen S(x,1) und S(x,2) gewonnene Bitfolge B(k) gezeigt, wobei eine Schraffur für den Wert "1" und leere Rechtecke für den Wert "0" stehen. Die ausgelesene Information beginnt daher mit "10010 ..."

Die Paare in der Paarsequenz P(x) mit zwei undefinierten Zuständen finden sich bei den Übergängen von hohen zu niedrigen bzw. von niedrigen zu hohen Intensitätswerten im Abbild 40, weil die Grenze zwischen zwei Rasterpaaren die lichtempfindliche Fläche des Photodetektors 28 teilt oder die Rasterpaare nicht perfekt abgebildet werden und daher in beiden Lesephasen ein Anteil des Abbilds 40 mit hoher Intensität vom Photodetektor 28 registriert wird. Umwelteinflüsse, wie Kratzer, Verschmutzung usw. können den Informationsstreifen 2 derart beschädigen, dass sich die dargestellte Information nicht mehr lückenlos erkennen lässt. Die beschriebene Kodierung der optisch maschinell lesbaren Information durch zwei Zustände aus vier möglichen weist den Vorteil auf, dass durch die Beschädigung die Wertigkeit des Rasterpaars nicht in den andern definierten Zustand wechselt, also von "0" zu "1" oder "1" zu "0", sondern in einen der beiden übrigen, undefinierten Zustand wechselt.

Die Paare P(x) mit einem undefinierten Zustand und die eindeutig nicht als Endpaare klassifizierten Paare P(x) mit der Wertkombination "0,0" sind aufgrund ihrer bekannten örtlichen Lage und im Vergleich zu ihren benachbarten Werten rekonstruierbar, d.h. diesen Paare P(x) werden die wahrscheinlichste Wertkombination "1,0" bzw. "0,1" zugeordnet, wobei der Rechner 41 eine der dem Fachmann bekannten Fehlerfunktionen verwendet. Mit Vorteil ist die Information auf dem Informationsstreifen 2 mehrfach, z.B. als Palindrom, abgelegt, da selbst bei massiven Beschädigungen die Information aus den erhalten gebliebenen Fragmenten rekonstruiert werden kann. Die Figur 5 zeigt das Dokument 1 beispielhaft in Form eines persönlichen Ausweises, Kredit- oder Wertkarte. Das Dokument 1 trägt auf seiner Oberfläche 11 den Informationsstreifen 2 und weist auf der Oberfläche 11 Informationsfelder 43, 44 mit Informationen in maschinell lesbarer Klarschrift auf, wie beispielsweise Name, Geburtsdatum, Gültigkeitsdauer, Nationalität, biometrische Daten, Passnummer usw. Bei Wertkarten sind weitere elektronische Daten zur Identität der Karte in einem IC - Modul 45 und/oder magnetisch auf einem Magnetstreifen 46 gespeichert, wobei letzterer meist auf der Rückseite des Dokuments 1 angebracht ist.

Zum maschinellen Überprüfen der Dokumente 1 auf Echtheit durch Kontrollorgane eignen sich Lesegeräte oder Verifikatoren, die zu einem in der WO 00/38932 beschriebenen Sicherheitssystem gehören. Neben der Leseanordnung enthält das Lesegerät wenigstens einen Klarschriftleser zum Lesen von visuell lesbarer Information. Zusätzlich oder auch anstelle des Klarschriftlesers können eine Einrichtung zum Auslesen von Information aus dem IC - Modul 45 und/oder aus einem Magnetstreifen 46 im Lesegerät angeordnet sein.

## Patentansprüche

1. Leseanordnung zum maschinellen Lesen eines in einem Lesebereich (12) befindlichen, rechteckförmigen Informationsstreifens (2), welche aus einer über der Leseebene (7) angeordneten Detektorenanordnung (4) aus einer Anzahl M von wenigstens einzeilig, linear angeordneten Photodetektoren (28), einem optischen Abbildungselement (3) zum Erzeugen eines Abbilds (40) des ganzen streifenförmigen Lesebereichs (12) der Leseebene (7) auf parallel zur Leseebene (7) ausgerichteten, lichtempfindlichen Flächen der Photodetektoren (28), wenigstens einer parallel über der Leseebene (7) angeordneten, linearen Beleuchtungseinrichtung (5; 6) zum vollständigen Ausleuchten des Lesebereichs (12) mit Beleuchtungsstrahlen (20; 21) aus einer vorbestimmten Beleuchtungsrichtung (α; β) und einer Auswerteeinheit (24) zum Empfangen und Auswerten von Detektorsignalen (S(1); S(2)) der Photodetektoren (28) besteht, wobei eine gedachte gemeinsame Symmetrieebene (13), die parallel zu einer optischen Achse des Abbildungselements (3) und zur linearen Beleuchtungseinrichtung (5; 6) ausgerichtet ist, das Abbildungselement (3), die Detektorenanordnung (4) und den Lesebereich (12) mittig in der Längsrichtung schneidet und der zweizeilige Informationsstreifen (2) eine optisch kodierte Information von N Elementen einer Bitfolge (B(k)) aufweist,
**dadurch gekennzeichnet,**
**dass** die lineare Anordnung der M Photodetektoren (28) wenigstens die Länge des Abbilds (40) aufweist,
**dass** ein von der Auswerteeinheit (24) gesteuerter Lesezyklus mit Lesepausen wenigstens zwei sich in der Beleuchtung des Lesebereichs (12) unterscheidende Lesephasen umfasst,
**dass** sich die Beleuchtung in den Lesephasen durch die Beleuchtungsrichtung (α; β) und/oder die Qualität des von der Beleuchtungseinrichtung (5; 6) emittierten Lichts unterscheidet,
**dass** der auf den lichtempfindlichen Flächen der Photodetektoren (28) abgebildete Lesebereich (12) in der ersten Lesephase die mit dem ersten Beleuchtungsstrahl (20) und in der zweiten Lesephase die mit dem zweiten Beleuchtungsstrahl (21) erzeugte Helligkeitsverteilung aufweist,
**dass** die Detektorsignale (S(1)) der ersten Lesephase eine erste Sequenz aus den Detektorsignalen (S(x,1)) der M Photodetektoren (28) und die Detektorsignale (S(2)) der zweiten Lesephase eine zweite Sequenz aus den Detektorsignalen (S(x,2)) der M Photodetektoren (28) bilden, wobei x die Werte 1 bis M durchläuft, und
**dass** ein Erkennen der Information in einem Rechner (41) der Auswerteeinheit (24) in der zweiten Lesepause des Lesezyklus ein Invertieren der Detektorsignale (S(x,2) der zweiten Sequenz, ein Vergleichen der invertierten Detektorsignale (S(x,2) der zweiten Sequenz mit den Detektorsignalen (S(x,1) der ersten Sequenz zum Überprüfen auf richtiges Ablesen und ein Erzeugen der verifizierten Bitfolge (B(k)) aus den Detektorsignalen S(1) und S(2) umfasst.

2. Leseanordnung nach Anspruch 1,
**dadurch gekennzeichnet,**
**dass** das Erkennen der Information ein Zuordnen von Bit-Signalen (S(x,1), S(x,2)) zu den Detektorsignalen (S(x,1), S(x,2)) für alle x von 1 bis M beinhaltet, wobei das Bit-Signal (S(x,1), S(x,2)) einen ersten Bitzustand "1" bzw. einen zweiten Bitzustand "0" aufweist, wenn das Detektorsignal (S(x,1), S(x,2)) auf einem vorbestimmten ersten Signalniveau "1" bzw. auf einem vorbestimmten zweiten Signalniveau "0" liegt.

3. Leseanordnung nach Anspruch 1 oder 2,
**dadurch gekennzeichnet,**
**dass** das emittierte Licht der Beleuchtungseinrichtungen (5; 6) im wesentlichen monochromatisch ist und sich in den Wellenlängen λ unterscheidet.

4. Leseanordnung nach Anspruch 1 oder 2,
**dadurch gekennzeichnet,**
**dass** das emittierte Licht der Beleuchtungseinrichtungen (5; 6) von gleicher Farbe ist und **dass** sich die Beleuchtungsrichtungen (α, β) unterscheiden.

5. Leseanordnung nach einem der Ansprüche 1 bis 4,
**dadurch gekennzeichnet,**
**dass** die Anzahl M der Photodetektoren (28) wenigstens das dreifache der Anzahl N der Elemente der Bitfolge (B(k)) ist, so dass im Abbild (40) jedes Element der Bitfolge (B(k)) von wenigstens drei Photodetektoren (28) pro Zeile der Detektoranordnung (4) überdeckt ist.

6. Leseanordnung nach einem der Ansprüche 1 bis 5,
**dadurch gekennzeichnet,**
**dass** die Detektoranordnung (4) ein "charge coupled device" ist und eine lineare Anordnung der M Photodetektoren (28) pro Zeile aufweist.

7. Leseanordnung nach Anspruch 6,
**dadurch gekennzeichnet,**
**dass** die Detektoranordnung (4) in einer Zeile M = 2048 Photodetektoren (28) enthält, die eine lineare Einteilung längs einer parallel zur Längsseite der Lesebereichs (12) ausgerichteten Abszissenachse X von 14 µm aufweisen.

8. Leseanordnung nach Anspruch 6 oder 7,
**dadurch gekennzeichnet,**
**dass** die Detektorenanordnung (4) mehrzeilig ist und die lichtempfindliche Fläche von jedem der Photodetektoren (28) eine Abmessung von 14 µm mal 14 µm aufweist.

9. Leseanordnung nach einem der Ansprüche 1 bis 7,
**dadurch gekennzeichnet,**
**dass** zwischen dem Abbildungselement (3) und der Detektorenanordnung (4) ein eindimensionaler Streuer angeordnet ist.

10. Leseanordnung nach einem der Ansprüche 6 bis 9,
**dadurch gekennzeichnet,**
**dass** die Photodetektoren (28) integrierte Farbfilter zum Erfassen und Analysieren des Abbilds (40) mit Farbsignalen, getrennt in den drei Primärfarben, aufweisen.

11. Leseanordnung nach einem der Ansprüche 1 bis 10,
**dadurch gekennzeichnet,**
**dass** ein Polarisationsfilter als Analysator (22) zwischen dem Abbildungselement (3) und der Detektorenanordnung (4) angeordnet ist.

12. Leseanordnung nach einem der Ansprüche 1 bis 11,
**dadurch gekennzeichnet,**
**dass** die Beleuchtungseinrichtungen (5; 6) beiderseits der Symmetrieebene (13) angeordnet ist.

13. Leseanordnung nach Anspruch 12,
**dadurch gekennzeichnet,**
**dass** eine erste Beleuchtungseinrichtung (5) und eine zweite Beleuchtungseinrichtung (6) zur Beleuchtung des Lesebereichs (12) symmetrisch zur Symmetrieebene (13) angeordnet sind.

14. Leseanordnung nach einem der Ansprüche 1 bis 13,
**dadurch gekennzeichnet,**
**dass** die Symmetrieebene (13) senkrecht auf der Leseebene (7) steht.

15. Leseanordnung nach einem der Ansprüche 1 bis 14,
**dadurch gekennzeichnet,**
**dass** wenigstens eine Beleuchtungseinrichtung (5 bzw. 6) aus einer linearen Anordnung einer Vielzahl von Leuchtdioden besteht und **dass** die Leuchtdioden Licht in der Beleuchtungsrichtung α bzw. β emittieren.

16. Verwendung der Leseanordnung nach einem der Ansprüche 1 bis 15 in einem Lesegerät zum Lesen von Dokumenten (1),
**dadurch gekennzeichnet,**
**dass** das Lesegerät neben der Leseanordnung einen Klarschriftleser und/oder eine Einrichtung zum Auslesen von Information aus einem IC - Modul 45 und/oder aus einem Magnetstreifen 46 des Dokuments (1) enthält.

## Claims

1. Read arrangement for the machine reading of a rectangular information strip (2) which is located in a read area (12), which arrangement comprises a detector arrangement (4) arranged above the read plane (7) and comprising a number M of at least single-line, linearly arranged photodetectors (28), an optical imaging element (3) for producing an image (40) of the entire strip-like read area (12) of the read plane (7) on light-sensitive surfaces of the photodetectors (28) aligned parallel with the read plane (7), at least one linear illuminating device (5; 6) arranged parallel above the read plane (7) for the complete illumination of the read area (12) with illuminating beams (20; 21) from a predetermined illumination direction (α; β), and an evaluation unit (24) for receiving and evaluating detector signals (S(1); S(2)) from the photodetectors (28), an imaginary common plane of symmetry (13), which is aligned parallel to an optical axis of the imaging element (3) and to the linear illuminating device (5; 6), intersecting the imaging element (3), the detector arrangement (4) and the read area (12) centrally in the longitudinal direction, and the two-line information strip (2) having optically encoded information of N elements of a bit sequence (B(k)),
**characterized**
**in that** the linear arrangement of the M photodetectors (28) is at least as long as the image (40),
**in that** a read cycle with read pauses controlled by the evaluation unit (24) comprises at least two read phases which differ in the illumination of the read area (12),
**in that** the illumination in the read phases differs in the illumination direction (α; β) and/or the quality of the light emitted by the illuminating device (5; 6)
**in that** the read area (12) imaged on the light-sensitive surfaces of the photodetectors (28) in the first read phase has the brightness distribution produced by the first illuminating beam (20) and, in the second read phase, the brightness distribution produced by the second illuminating beam (21),
**in that** the detector signals (S(1)) of the first read phase form a first sequence of the detector signals (S(x,1)) of the M photodetectors (28) and the detector signals (S(2)) of the second read phase form a second sequence of the detector signals (S(x,2)) of the M photodetectors (28), x passing through the values 1 to M, and
**in that** detection of the information in a computer (41) of the evaluation unit (24) in the second read pause of the read cycle comprises inverting the detector signals (S(x,2)) of the second sequence, comparing the inverted detector signals (S(x,2)) of the second sequence with the detector signals (S(x,1)) of the first sequence to check for correct reading, and producing the verified bit sequence (B(k)) from the detector signals S(1) and S(2).

2. Read arrangement according to Claim 1, **characterized in that** the detection of the information includes allocating bit signals (S(x,1), S(x,2)) to the detector signals (S(x,1), S(x,2)) for all x from 1 to M, the bit signal (S(x,1), S(x,2)) exhibiting a first bit state "1" and a second bit state "0" when the detector signal (S(x,1), S(x,2)) lies at a predetermined first signal level "1" and, respectively, at a predetermined second signal level "0".

3. Read arrangement according to Claim 1 or 2, **characterized in that** the emitted light from the illuminating devices (5; 6) is substantially monochromatic and differs in the wavelengths λ.

4. Read arrangement according to Claim 1 or 2, **characterized in that** the emitted light from the illuminating devices (5; 6) is of the same colour, and **in that** the illuminating directions (α, β) differ.

5. Read arrangement according to one of Claims 1 to 4, **characterized in that** the number M of photodetectors (28) is at least three times the number N of the elements of the bit sequence (B(k)), so that, in the image (40), each element of the bit sequence (B(k)) is covered by at least three photodetectors (28) for each line of the detector arrangement (4).

6. Read arrangement according to one of Claims 1 to 5, **characterized in that** the detector arrangement (4) is a "charge coupled device" and has a linear arrangement of the M photodetectors (28) per line.

7. Read arrangement according to Claim 6, **characterized in that** the detector arrangement (4) contains M = 2048 photodetectors (28) in a line, which has a linear division of 14 µm along an abscissa axis X aligned parallel to the longitudinal side of the read area (12).

8. Read arrangement according to Claim 6 or 7, **characterized in that** the detector arrangement (4) has many lines, and the light-sensitive surface of each of the photodetectors (28) has a dimension of 14 µm times 14 µm.

9. Read arrangement according to one of Claims 1 to 7, **characterized in that** a one-dimensional scattering means is arranged between the imaging element (3) and the detector arrangement (4).

10. Read arrangement according to one of Claims 6 to 9, **characterized in that** the photodetectors (28) have integrated colour filters for registering and analysing the image (40) with colour signals separated into the three primary colours.

11. Read arrangement according to one of Claims 1 to 10, **characterized in that** a polarization filter is arranged as an analyser (22) between the imaging element (3) and the detector arrangement (4).

12. Read arrangement according to one of Claims 1 to 11, **characterized in that** the illuminating devices (5; 6) are arranged on both sides of the plane of symmetry (13).

13. Read arrangement according to Claim 12, **characterized in that** a first illuminating device (5) and a second illuminating device (6) for illuminating the read area (12) are arranged symmetrically with respect to the plane of symmetry (13).

14. Read arrangement according to one of Claims 1 to 13, **characterized in that** the plane of symmetry (13) is at right angles to the read plane (7).

15. Read arrangement according to one of Claims 1 to 14, **characterized in that** at least one illuminating device (5 or 6) comprises a linear arrangement of a large number of light-emitting diodes, and **in that** the light-emitting diodes emit light in the illumination direction α or β.

16. Use of the read arrangement according to one of Claims 1 to 15 in a reader for reading documents (1), **characterized in that** the reader includes, in addition to the read arrangement, a plain text reader and/or a device for reading information from an IC module 45 and/or from a magnetic strip 46 belonging to the document (1).

## Revendications

1. Dispositif de lecture pour la lecture automatique d'une bande d'information (2) de forme rectangulaire, se trouvant dans la zone de lecture (12), lequel se compose d'un dispositif de détection (4) agencé sur le niveau de lecture (7), d'un nombre M de photodétecteurs (28) à au moins un chiffre, agencés de façon linéaire, un élément de représentation optique (3) permettant de générer une représentation (40) de la totalité de la zone de lecture (12) en forme de bande du niveau de lecture (7) sur des surfaces photosensibles agencées de manière parallèle au niveau de lecture (7) des photodétecteurs (28), d'au moins un dispositif lumineux (5:6) linéaire agencé de manière parallèle sur le niveau de lecture (7) en vue de permettre un éclairage intégral de la zone de lecture (12) avec un rayonnement lumineux (20:21) depuis une direction de l'éclairage (α ; β) prédéterminée et d'une unité d'interprétation (24) permettant de recevoir et d'interpréter des signaux de détection (S(1):S(2)) des photo-détecteurs (28), dans lequel dispositif un niveau de symétrie (13) supposé commun, qui est disposé de façon parallèle par rapport à un axe optique de l'élément de représentation (3) et par rapport au dispositif lumineux linéaire (5:6), sépare l'élément de représentation (3), le dispositif de détection (4) et la zone de lecture (12) au centre dans le sens de la longueur et la bande d'information à deux chiffres (2) présente une information codée optiquement des N éléments d'une suite numérique de bits (B(k)), **caractérisé en ce que** l'agencement linéaire des M photodétecteurs (28) présente au moins la longueur de représentation, **en ce qu'**un cycle de lecture (24) commandé par l'unité d'interprétation comportant des pauses de lecture comprend au moins deux phases de lecture se différenciant dans l'éclairage de la zone de lecture (12), **en ce que** l'éclairage se différencie dans les phases de lecture par le sens d'éclairage (α ; β) et / ou la qualité de la lumière émise par le dispositif lumineux (5 ; 6), **en ce que** la zone de lecture (12) représentée sur les surfaces photosensibles des photodétecteurs (28) présente dans la première phase de lecture la première répartition de luminosité générée à l'aide du rayonnement lumineux (20) et dans la seconde phase de lecture la seconde répartition de luminosité générée à l'aide du rayonnement lumineux (21), **en ce que** les signaux du détecteur (S(1) de la première phase de lecture forment une première séquence à partir des signaux du détecteur (S(x,1) des M photodétecteurs (28) et les signaux du détecteur (S(2) de la seconde phase de lecture forment une seconde séquence à partir des signaux du détecteur (S(x,2) des M photodétecteurs (28), x parcourant les valeurs de 1 à M, et **en ce que** la reconnaissance de l'information dans un ordinateur (41) de l'unité d'interprétation (24) comprend au cours de la seconde pause de lecture du cycle de lecture un inverseur pour signaux du détecteur (S(x,2) de la seconde séquence, un comparateur des signaux de détecteurs inversés (S(x,2) de la seconde séquence avec les signaux du détecteur (S(x,1) de la première séquence pour vérifier la correction de la lecture et un générateur de suites numériques de bits (B(k)) depuis les signaux du détecteur S(1) et S(2).

2. Dispositif de lecture selon la revendication 1, **caractérisé en ce que** la reconnaissance de l'information comprend une attribution de signaux de bits (S(x,1), S(x,2) aux signaux du détecteur (S(x,1), S(x,2) pour tout x de 1 à M, dans lequel dispositif le signal de bit (S(x,1), S(x,2) présente une premier état de bits « 1 » ou un second état de bit « 0 », si le signal du détecteur (S(x,1), S(x,2) se trouve sur un premier niveau de signal prédéterminé « 1 » ou sur un second niveau de signal prédéterminé « 0 ».

3. Dispositif de lecture selon la revendication 1 ou 2, **caractérisé en ce que** la lumière des dispositifs d'éclairage (5 ; 6) émise est principalement monochromatique et se différencie dans des longueurs d'ondes λ.

4. Dispositif de lecture selon la revendication 1 ou 2, **caractérisé en ce que** la lumière des dispositifs d'éclairage (5 ; 6) émise est de la même couleur et que les sens d'éclairage (α ; β) se différencient.

5. Dispositif de lecture selon l'une quelconque des revendications 1 à 4, **caractérisé en ce que** le nombre M de photodétecteurs (28) est au moins le triple du nombre N des éléments de suites numériques de bits (B(k)), de telle sorte que dans la représentation (40) chaque élément de suites numériques de bits (B(k)) soit couvert par au moins trois photodétecteurs (28 par ligne du dispositif de détection (4).

6. Dispositif selon l'une quelconque des revendications de 1 à 5, **caractérisé en ce que** le dispositif de détection (4) est un « charge coupled device » (détecteur à transfert de charge) et présente un agencement linéaire des photodétecteurs (28) par ligne.

7. Dispositif selon la revendication 6 **caractérisé en ce que** le dispositif de détection contient dans une ligne M = 2048 photodétecteurs (28), qui présentent une disposition linéaire le long d'un axe des abscisses X de 14 µm disposé de façon parallèle par rapport au côté de la longueur de la zone de lecture (12).

8. Dispositif selon la revendication 6 ou 7 **caractérisé en ce que** le dispositif de détection (4) comprend plusieurs lignes et la surface photosensible de chacun des photodétecteurs (28) présente une mesure de 14 µm fois 14 µm.

9. Dispositif selon l'une quelconque des revendications 1 à 7, **caractérisé en ce qu'**une commande unidimentionnelle est agencée entre l'élément de représentation (3) et le dispositif de détection (4).

10. Dispositif de lecture selon l'une quelconque des revendications 6 à 9 **caractérisé en ce que** les photodétecteurs (28) présentent des filtres de couleur intégrés pour saisir et analyser la représentation (40) avec des signaux de couleur, séparés selon les trois couleurs primaires.

11. Dispositif de lecture selon l'une quelconque des revendications de 1à 10 **caractérisé en ce qu'**un filtre polarisant est agencé comme analyseur (22) entre l'élément de représentation (3) et le dispositif de détection (4).

12. Dispositif de lecture selon l'une quelconque des revendications 1 à 11 **caractérisé en ce que** les dispositifs lumineux (5, 6) sont agencés de part et d'autre du niveau de symétrie.

13. Dispositif de lecture selon la revendication 12, **caractérisé en ce qu'**un premier dispositif lumineux (5) et un second dispositif lumineux (6) sont agencés pour l'éclairage de la zone de lecture (12) de façon symétrique par rapport au niveau de symétrie (13).

14. Dispositif de lecture selon l'une quelconque des revendications 1 à 13 **caractérisé en ce que** le niveau de symétrie (13) se trouve perpendiculaire au niveau de lecture (7).

15. Dispositif de lecture selon l'une quelconque des revendications 1 à 14, **caractérisé en ce qu'**au moins un dispositif lumineux (5 ou 6) se compose d'un agencement linéaire de plusieurs diodes lumineuses et **en ce que** les diodes lumineuses émettent de la lumière dans le sens d'éclairage α ou β.

16. Utilisation du dispositif de lecture selon l'une quelconque des revendications de 1 à 15 dans un appareil de lecture pour la lecture de documents (1), **caractérisée en ce que** l'appareil de lecture comprend un lecteur optique et / ou un dispositif de lecture des informations depuis le module IC 45 et / ou depuis une bande magnétique 46 du document (1).
